# EUROPEAN PATENT APPLICATION

(11) **EP 1 843 199 A1**
(43) Date of publication of application: **10.10.2007**
(21) Application number: 07251506.7
(22) Date of filing: 05.04.2007
(51) Int. Cl.: G03B 21/10, G03B 21/62, B29D 11/00

(54) **Rear projection screen**

(30) Priority: 06.04.2006 JP 2006105713
(71) Applicant: Sony Corporation, Minato-ku Tokyo 108-0075 (JP)
(72) Inventor: Makida, Minoru c/o Sony Corporation, Tokyo 108-0075 (JP); Iwaki, Takaaki c/o Sony Corporation, Tokyo 108-0075 (JP); Ogawa, Yasufumi c/o Sony Corporation, Tokyo 108-0075 (JP)
(74) Representative: Nicholls, Michael John

(57) **Abstract**

Disclosed herein is a rear projection display apparatus, including: an apparatus body; a transmission type screen disposed on the front face of the apparatus body; and an image projection apparatus disposed in the inside of the apparatus body and configured to project an image to the transmission type screen from the rear side of the transmission type screen. In the apparatus, the transmission type screen having a three-element configuration including a horizontal lenticular screen, a vertical lenticular screen and a Fresnel screen or a two-element configuration including a horizontal lenticular screen or a fly-eye screen and a Fresnel screen; the Fresnel screen including a substrate made of a glass material and one or a plurality of ones of a lens, an antiglare layer and an internal diffusion layer formed directly on the substrate but provided not by lamination.

## Description

### CROSS REFERENCES TO RELATED APPLICATIONS

The present invention contains subject matter related to Japanese Patent Application JP 2006-105713 filed in the Japan Patent Office on April 6, 2006, the entire contents of which being incorporated herein by reference.

### BACKGROUND OF THE INVENTION

### 1. Field of the Invention

This invention relates a rear projection display apparatus wherein an image is projected from the rear side of a transmission type screen to the transmission type screen to display the image and a transmission type screen for use with a rear projection display apparatus.

### 2. Description of the Related Art

In recent years, a rear projection display apparatus which is a kind of an image display apparatus having a large screen has been popularized. In the rear projection display apparatus, image light emitted from an image projection apparatus which includes an image light source such as a CRT, an LCD or a DLP is enlarged and reflected by a mirror and projected to a transmission type screen installed in front of an apparatus body from the rear side of the transmission type screen such that the image is viewed from the front side of the transmission type screen.

The transmission type screen for use with a rear projection display apparatus includes a Fresnel screen having a Fresnel lens for converting image light projected from the rear side of the transmission type screen into parallel light. The transmission type screen further includes a lenticular screen having lenticular lenses for deflecting the image light so as to be distributed uniformly over the entire screen.

In a transmission type screen of the type described, a resin material or a glass material is used for a substrate of the Fresnel screen or the lenticular screen. A film on which a Fresnel lens or lenticular lenses are formed is laminated on the substrate to form the Fresnel lens or the lenticular lenses. One of such transmission type screens is disclosed, for example, in Japanese Patent Laid-Open No. 2002-357868 (paragraph 0014).

### SUMMARY OF THE INVENTION

Since the transmission type screen described above is structured such that a film on which a lens or lenses are formed is laminated on a substrate, a foreign article is liable to be inserted between the film and the substrate upon such lamination, resulting in production of air bubbles. This gives rise to a problem that the yield is deteriorated and the productivity is dropped.

Therefore, it is demanded to provide a transmission type screen which prevents production of air bubbles arising from insertion of a foreign article and is superior in productivity.

According to an embodiment of the present invention, there is provided a rear projection display apparatus including an apparatus body, a transmission type screen disposed on the front face of the apparatus body, and an image projection apparatus disposed in the inside of the apparatus body and configured to project an image to the transmission type screen from the rear side of the transmission type screen, the transmission type screen having a three-element configuration including a horizontal lenticular screen, a vertical lenticular screen and a Fresnel screen or a two-element configuration including a horizontal lenticular screen or a fly-eye screen and a Fresnel screen, the Fresnel screen including a substrate made of a glass material and one or a plurality of ones of a lens, an antiglare layer and an internal diffusion layer formed directly on the substrate but provided not by lamination.

The lens, antiglare layer and internal diffusion layer of the Fresnel screen may be formed on the glass substrate using an ultraviolet curing type resin material or a thermosetting type resin material.

The rear projection display apparatus may be configured such that the transmission type screen has the three-element configuration which includes a horizontal lenticular screen having a glass substrate, a vertical lenticular screen having a resin substrate and a Fresnel screen having a glass substrate, and the horizontal lenticular screen and the Fresnel screen have a substantially same outer profile and are held fixedly on the apparatus body while the vertical lenticular screen is formed with an outer profile smaller than that of the horizontal lenticular screen and the Fresnel screen and is held in a sandwiched manner between the horizontal lenticular screen and the Fresnel screen.

The rear projection display apparatus may be configured such that the transmission type screen has the three-element configuration which includes a horizontal lenticular screen having a resin substrate, a vertical lenticular screen having a resin substrate and a Fresnel screen having a glass substrate or the two-element configuration which includes a horizontal lenticular screen or fly-eye screen having a resin substrate and a Fresnel screen having a glass substrate, and the Fresnel screen is formed with an outer profile greater than that of the other screen or screens and is fixedly held on the apparatus body while sides except one side of the other screen or screens are held with a clearance on the apparatus body separately from the Fresnel screen.

The rear projection display apparatus may be configured such that the transmission type screen has the two-element configuration which includes a horizontal lenticular screen having a glass substrate and a Fresnel screen having a glass substrate, and the horizontal lenticular screen and the Fresnel screen are formed with a substantially same outer profile and fixedly held on the apparatus body.

The rear projection display apparatus may be configured such that the transmission type screen has the two-element configuration which includes a horizontal lenticular screen or fly-eye screen in the form of a sheet and a Fresnel screen having a glass substrate, and the Fresnel screen is held at sides except one side thereof separately from the horizontal lenticular screen or fly-eye screen while the horizontal lenticular screen or fly-eye screen is formed with an outer profile greater than that of the Fresnel screen and is held on the apparatus body in such a state that tension is applied thereto.

The rear projection display apparatus may be configured such that the transmission type screen has the two-element configuration which includes a horizontal lenticular screen or fly-eye screen in the form of a sheet and a Fresnel screen having a glass substrate, and the horizontal lenticular screen or fly-eye screen is adhered and combined at four sides thereof to and with the Fresnel screen by means of an adhesion element.

In the rear projection display apparatus, the transmission type screen includes the Fresnel screen having the substrate made of a glass material, and one or plural ones of a lens, an antiglare layer and an internal diffusion layer are formed directly on the glass substrate. Consequently, air bubbles arising from insertion of a foreign article in the past are not produced. Therefore, a high yield is achieved and the productivity is enhanced. Further, a film for lamination as is demanded in the past apparatus is not demanded. Therefore, the cost is reduced, and the transmission type screen and hence the rear projection display apparatus can be provided at a low price.

Further, since the transmission type screen uses a glass material for the substrate of the Fresnel screen, the flatness of the screen is maintained stably. Consequently, a resulting image has reduced distortion.

Furthermore, in the transmission type screen, a resin layer having a function of a lens, an antiglare layer or an internal diffusion layer is formed on the glass substrate. Therefore, an effect of preventing dew formation by relaxation of the specific heat can be achieved.

### BRIEF DESCRIPTION OF THE DRAWINGS

FIG. 1 is a perspective view showing an appearance of a rear projection display apparatus to which the present invention is applied;
FIG. 2 is a side elevational sectional view showing an internal configuration of the rear projection display apparatus;
FIG. 3 is a horizontal sectional view showing an example of a structure of a transmission type screen of a three-element configuration;
FIG. 4 is a similar view but showing another example the structure of the transmission type screen of a three-element configuration;
FIG. 5 is a vertical sectional view showing an assembly structure of the transmission type screens shown in FIGS. 3 and 4;
FIGS. 6 and 7 are horizontal sectional views showing different examples of the structure of the transmission type screen of a three-element configuration;
FIG. 8 is a vertical sectional view showing an assembly structure of the transmission type screens shown in FIGS. 6 and 7;
FIGS. 9, 10 and 11 are horizontal sectional views showing different examples of a structure of a transmission type screen of a two-element configuration;
FIG. 12 is a vertical sectional view showing an assembly structure of the transmission type screens shown in FIGS. 9, 10 and 11;
FIGS. 13, 14 and 15 are horizontal sectional views showing different examples of the structure of the transmission type screen of a two-element configuration;
FIG. 16 is a vertical sectional view showing an assembly structure of the transmission type screens shown in FIGS. 13, 14 and 15;
FIGS. 17, 18 and 19 are horizontal sectional views showing further different examples of the structure of the transmission type screen of a two-element configuration;
FIG. 20 is a vertical sectional view showing an assembly structure of the transmission type screens shown in FIGS. 17, 18 and 19;
FIGS. 21, 22 and 23 are horizontal sectional views showing further different examples of the structure of the transmission type screen of a two-element configuration; and

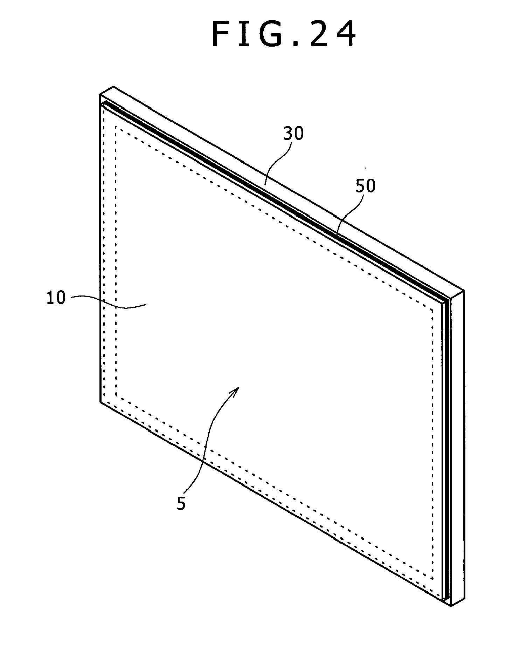

FIG. 24 is a vertical sectional view showing an assembly structure of the transmission type screens shown in FIGS. 21, 22 and 23.

### DETAILED DESCRIPTION OF THE PREFERRED EMBODIMENTS

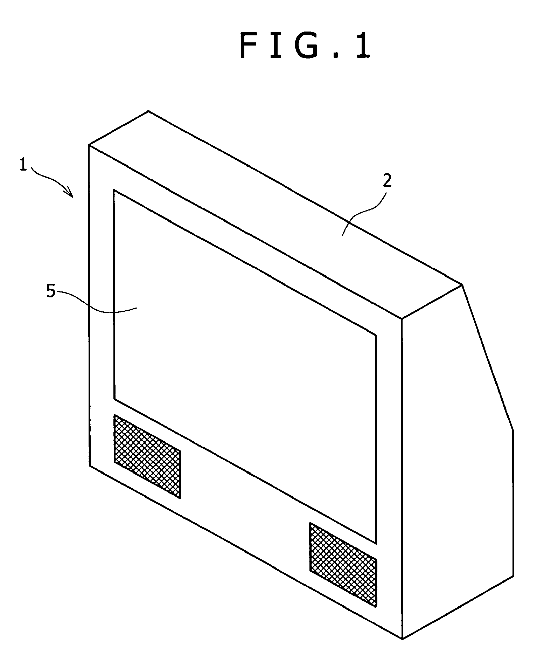

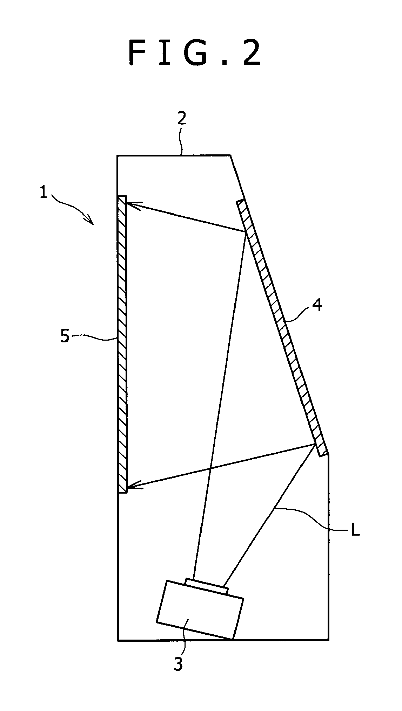

Referring first to FIG. 1, there is shown a rear projection display apparatus to which the present invention is applied. The rear projection display apparatus 1 shown includes an apparatus body 2 and a transmission type screen 5 provided on the front face of the apparatus body 2 such that an image is projected from the rear face side of the transmission type screen 5 to the transmission type screen 5 to display the image. Referring now to FIG. 2, an image projection apparatus 3 is installed in the inside of the apparatus body 2. The image projection apparatus 3 includes an image light source such as a CRT, an LCD unit or a DLP and emits image light L. The image light L is reflected by a reflecting mirror 4 and projected to the transmission type screen 5.

The transmission type screen may be formed from three screen elements or two screen elements. Several examples of the configuration of the transmission type screen are described below.

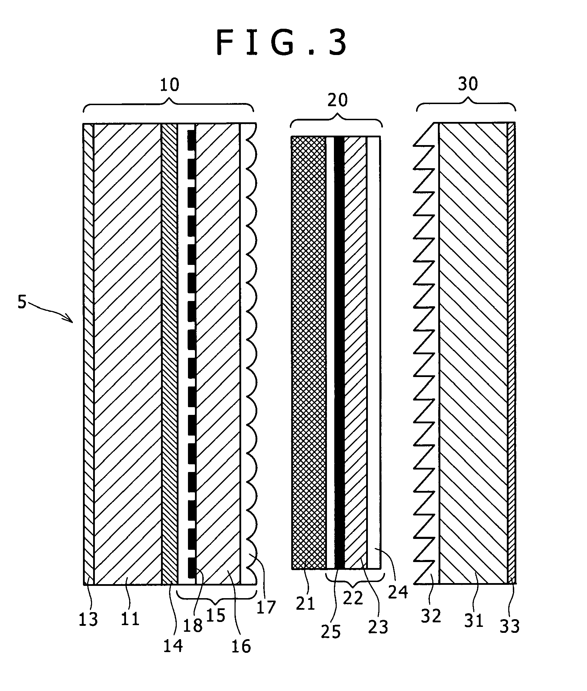

FIG. 3 shows a horizontal sectional view of an example of a transmission type screen of a three-element configuration.

Referring to FIG. 3, the transmission type screen 5 shown includes a horizontal lenticular screen 10, a vertical lenticular screen 20 and a Fresnel screen 30 disposed in order as viewed from the observer side, that is, from the left side in FIG. 3. Image light incoming from the right side in FIG. 3 is converted into parallel light perpendicular to the plane of the Fresnel screen 30 by the Fresnel screen 30 and is then deflected to a vertical direction by the vertical lenticular screen 20. Thereafter, the image light is deflected to a horizontal direction by the horizontal lenticular screen 10 to enlarge the angular field of view.

In the transmission type screen 5 having the configuration described above, a glass plate is used as a substrate 11 of the horizontal lenticular screen 10. Further, an antiglare hard coat layer 13 is formed on the face of the glass substrate 11 on the observer side while an internal diffusion layer 14 is formed on the opposite face of the glass substrate 11, that is, on the image light incoming side face of the glass substrate 11.

The antiglare hard coat layer 13 and the internal diffusion layer 14 are formed using an ultraviolet curing type resin material or a thermosetting type resin material. Each of the antiglare hard coat layer 13 and the internal diffusion layer 14 is formed by applying the material to the glass substrate 11 by screen printing or roll printing or by applying the material once to a film and transferring the material from the film to the glass substrate 11 and then performing irradiation of ultraviolet rays or heating to harden the resin.

The main material of the antiglare hard coat layer 13 and the internal diffusion layer 14 is an organic material such as styrene, acrylic, polycarbonate, epoxy, acrylate type monomer, acrylate-phosphorus type monomer, oligomer or copolymer of such compounds or an inorganic material such as ceramic or silica. Further, the main material is provided with an antiglare characteristic and an internal diffusion characteristic by emboss transfer or by mixture of an inorganic bead filler.

In the horizontal lenticular screen 10, a horizontal lenticular lens sheet 15 is laminated to the internal diffusion layer 14 of the glass substrate 11. The horizontal lenticular lens sheet 15 includes a sheet matrix 16 made of a synthetic resin material and horizontal lenticular lenses 17 formed on the sheet matrix 16 for deflecting light to a horizontal direction. For the material of the horizontal lenticular lenses 17, an ultraviolet curing type resin material or a thermosetting type resin material is used. Further, a black stripe layer 18 is provided on the horizontal lenticular lens sheet 15.

The vertical lenticular screen 20 includes a substrate 21 made of a synthetic resin material and a vertical lenticular lens sheet 22 laminated on the substrate 21. The vertical lenticular lens sheet 22 includes a sheet matrix 23 made of a synthetic resin material and vertical lenticular lenses 24 formed on the sheet matrix 23 for deflecting light to a vertical direction. For the material of the vertical lenticular lenses 24, an ultraviolet curing type resin material or a thermosetting type resin material is used. Further, a black stripe layer 25 is provided on the vertical lenticular lens sheet 22. Furthermore, in the vertical lenticular screen 20, the substrate 21 has an internal diffusion function.

The Fresnel screen 30 includes a substrate 31 made of a glass material, A Fresnel lens 32 formed on one of the opposite faces of the substrate 31, and an antiglare or antiglare internal confusion (antiglare and internal diffusion complex) layer 33 formed on the other face of the substrate 31. The Fresnel screen 30 in the present transmission type screen is of the refraction type, and in the Fresnel screen 30 of the refraction type, the Fresnel lens 32 is formed on the face of the substrate 31 on the observer side.

In the Fresnel screen 30, the Fresnel lens 32 is formed directly on the substrate 31. Here, the Fresnel lens 32 is formed using an ultraviolet curing type resin material or a thermosetting type resin material as a material thereof. In particular, the Fresnel lens 32 is formed by forming the lens configuration on the substrate 31 by a shape transfer method and then performing ultraviolet radiation or heating to harden the resin.

The main material of the Fresnel lens 32 is an organic material such as styrene, acrylic, polycarbonate, epoxy, acrylate type monomer, acrylate-phosphorus type monomer, oligomer or copolymer of such compounds or an inorganic material such as ceramic or silica.

Further, the antiglare or antiglare internal confusion layer 33 is formed using an ultraviolet curing type resin material or a thermosetting type resin material as a material. In particular, the antiglare or antiglare internal confusion layer 33 is formed by applying the material to the glass substrate 31 by screen printing or roll printing or by applying the material once to a film and transferring the material from the film to the glass substrate 31 and then performing irradiation of ultraviolet rays or heating to harden the resin.

The main material of the antiglare or antiglare internal confusion layer 33 is an organic material such as styrene, acrylic, polycarbonate, epoxy, acrylate type monomer, acrylate-phosphorus type monomer, oligomer or copolymer of such compounds or an inorganic material such as ceramic or silica. Further, the main material is provided with an antiglare characteristic or an internal diffusion characteristic or both of the characteristics by emboss transfer or by mixture of a bead filler formed from an inorganic material.

Further, in the Fresnel screen 30, in order to enhance the adhesive properties of the Fresnel lens 32 and the antiglare or antiglare internal confusion layer 33 to the glass substrate 31, a pre-process of a chemical method such as a chemical process, a coupling process or a primer process or a physical process such as a plasma contact process (glow discharge or corona discharge) or else a post-process of heating after application and transfer is performed.

As described above, in the transmission type screen 5 of the present example, a glass material is used for the substrate of the Fresnel screen, and one or plural ones of the lenses, antiglare layer and internal diffusion layer are not laminated but formed directly on the glass substrate. Due to the structure just described, such air bubbles arising from insertion of a foreign article are not produced. Therefore, a high yield is obtained and the productivity is enhanced. Further, since there is no necessity for a film for lamination employed in the past, the cost is reduced. Consequently, a screen of a reduced price can be provided.

Further, in the transmission type screen of the present example, since a glass material is used for the substrate of the Fresnel screen, the flatness of the screen is maintained stably, and consequently, an image which exhibits reduced image distortion can be obtained.

Furthermore, in the transmission type screen of the present embodiment, since a resin layer having a function of lenses, an antiglare layer or an internal diffusion layer is formed on the glass substrate, an effect of preventing dew formation by relaxation of the specific heat can be achieved.

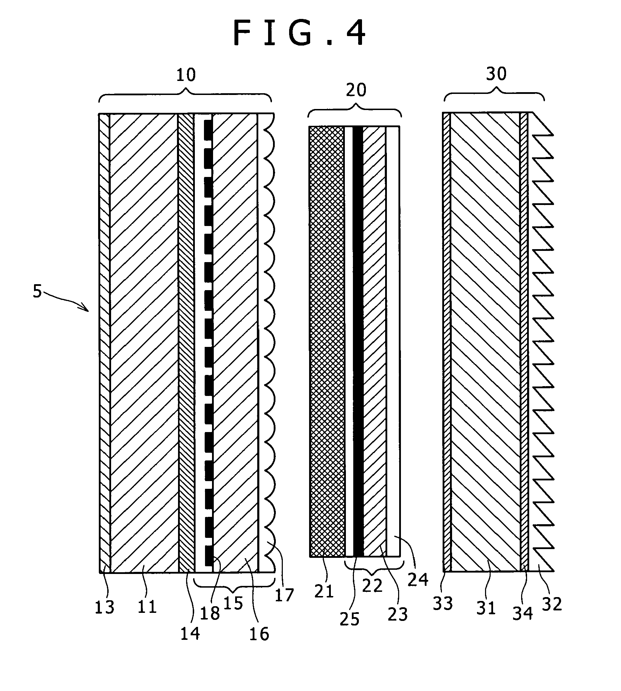

FIG. 4 shows a horizontal cross section of another example of a transmission type screen of a three-element configuration.

Referring to FIG. 4, the transmission type screen is a modification to but is different from that described hereinabove with reference to FIG. 3 in that the Fresnel screen 30 is formed as a Fresnel screen of the reflection type. In particular, while Fresnel screens are classified into those of the refraction type and those of the reflection type, the Fresnel screen 30 of the refraction type described hereinabove with reference to FIG. 3 has the Fresnel lens 32 on the face thereof on the observer side. In contrast, the Fresnel screen 30 of the reflection type shown in FIG. 4 has the Fresnel lens 32 formed on the face thereof remote from the observer side, that is, on the face thereof on the light incoming side.

In the Fresnel screen 30 shown in FIG. 4, the antiglare or antiglare internal confusion layer 33 is provided on the face of the substrate 31 on the observer side while an internal diffusion layer 34 is provided on the opposite face of the substrate 31. Further, the Fresnel lens 32 is formed using an ultraviolet curing type resin material or a thermosetting type resin material on the internal diffusion layer 34.

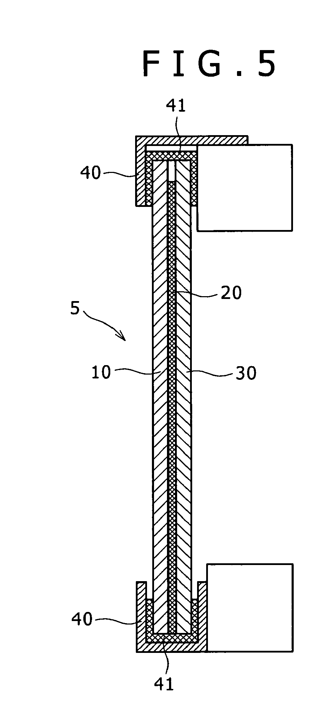

FIG. 5 shows a vertical cross section showing an assembly structure of the transmission type screen of the three-element structure described hereinabove with reference to FIG. 3 or 4 to an apparatus body. Referring to FIG. 5, where the substrate of the horizontal lenticular screen 10 is made of a glass material and the substrate of the vertical lenticular screen 20 is made of a resin material while the substrate of the Fresnel screen 30 is made of a glass material as in the transmission type screens described hereinabove with reference to FIGS. 3 and 4, the horizontal lenticular screen 10 and the Fresnel screen 30 are formed such that the outer profiles thereof have a substantially equal size and are held in a fixed state by a frame 40 on the apparatus body side. Meanwhile, the vertical lenticular screen 20 is formed with an outer profile smaller than that of the horizontal lenticular screen 10 and the Fresnel screen 30 and is held in a sandwiched state between the horizontal lenticular screen 10 and the Fresnel screen 30.

In the transmission type screens of FIGS. 3 and 4, the glass substrates of the horizontal lenticular screen 10 and the Fresnel screen 30 are less likely to have an influence of environmental variations of the temperature and the humidity. However, the resin substrate of the vertical lenticular screen 20 is likely to be elongated or contracted by an influence of environmental variations of the temperature and the humidity. Thus, where such an assembly structure of the transmission type screen as shown in FIG. 5 is used, even if elongation or contraction tends to occur with the vertical lenticular screen 20, this is not obstructed unnaturally, and therefore, neither wrinkle nor warpage occurs with the vertical lenticular screen 20.

Further, according to the assembly structure of the transmission type screen, the horizontal lenticular screen 10 and the Fresnel screen 30 are not held directly, but are held on the frame 40 through cushion members 41 of, for example, a foamed urethane, polyethylene, rubber, acrylic or polyolefin sheet so that breakage of the glass by interference between the glass substrate and the frame can be prevented.

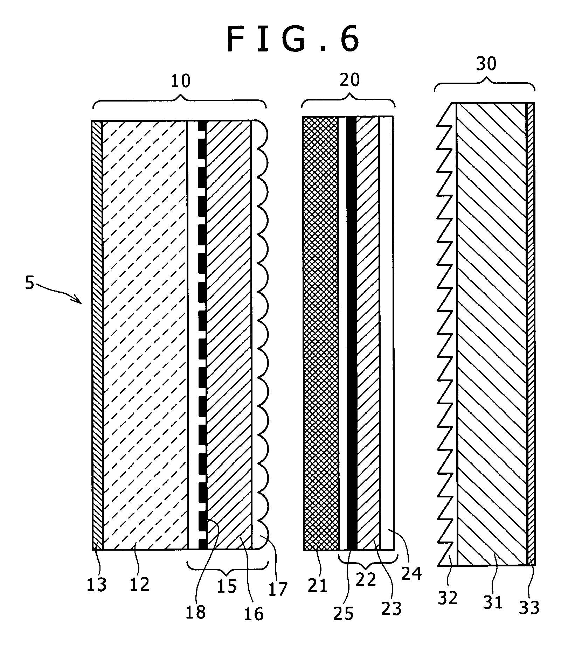

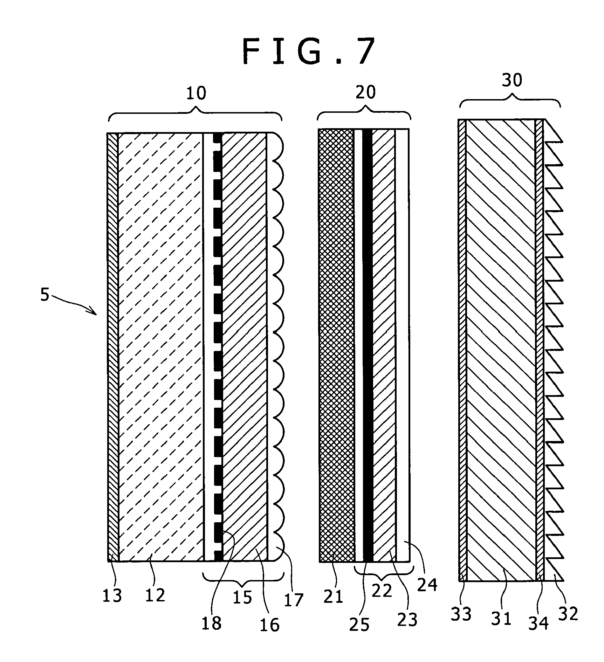

FIGS. 6 and 7 show horizontal cross sections of different examples of a transmission type screen of a three-element configuration. Referring to FIGS. 6 and 7, the transmission type screens are modifications to but are different from those described hereinabove with reference to FIGS. 3 and 4, respectively, in that the substrate of the horizontal lenticular screen 10 is formed as a resin substrate 12. In particular, in the transmission type screens of FIGS. 6 and 7, a resin material is used as the material of the substrate 12 of the horizontal lenticular screen 10. Further, the antiglare hard coat layer 13 is formed on the surface of the resin substrate 12 on the observer side while the horizontal lenticular lens sheet 15 is laminated to the opposite face of the resin substrate, that is, to the incoming side face of image light.

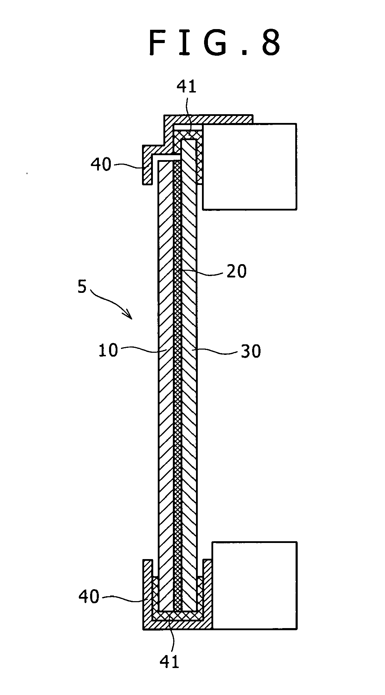

FIG. 8 shows a vertical cross section showing an assembly structure of the transmission type screen of a three-element structure described hereinabove with reference to FIG. 6 or 7 to an apparatus body. Referring to FIG. 8, where the substrate of the horizontal lenticular screen 10 is made of a resin material and the substrate of the vertical lenticular screen 20 is made of a resin material while the substrate of the Fresnel screen 30 is made of a glass material as in the transmission type screens described hereinabove with reference to FIGS. 6 and 7, the Fresnel screen 30 is formed such that the outer profile thereof has a size larger than that of the horizontal lenticular screen 10 and the vertical lenticular screen 20 and is held in a fixed state to the frame 40 on the apparatus body side. Meanwhile, the horizontal lenticular screen 10 and the vertical lenticular screen 20 are held on the frame 40 in such a state that the sides thereof except one side (lower side) have a clearance separately from the Fresnel screen 30.

In the transmission type screens of the configurations described hereinabove with reference to FIGS. 6 and 7, the resin substrates of the horizontal lenticular screen 10 and the vertical lenticular screen 20 are likely to be extended or contracted by environmental variations of the temperature and the humidity. Thus, where such an assembly structure of the transmission type screen as shown in FIG. 8 is used, even if elongation or contraction tends to occur with the horizontal lenticular screen 10 and the vertical lenticular screen 20, this is not obstructed unnaturally. Therefore, neither wrinkle nor warpage occurs with any of the horizontal lenticular screen 10 and the vertical lenticular screen 20.

Further, according to the assembly structure of the transmission type screen, the Fresnel screen 30 is held on the frame 40 through cushion members 41 of, for example, a foamed urethane, polyethylene, rubber, acrylic or polyolefin sheet so that breakage of the glass by interference between the glass substrate and the frame can be prevented.

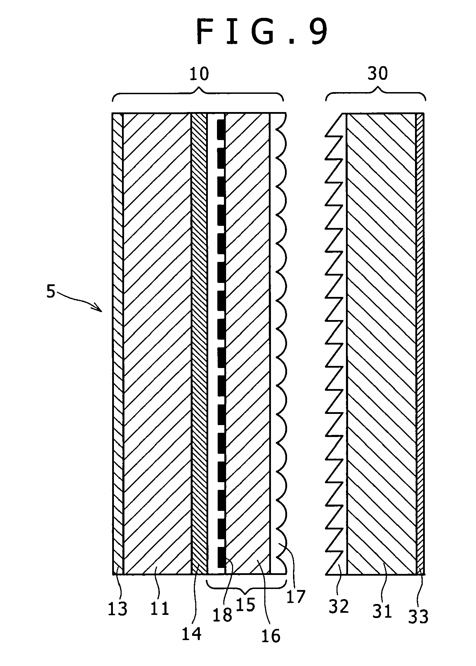

FIG. 9 shows a horizontal cross section of an example of a transmission type screen of a two-element configuration.

Referring to FIG. 9, the transmission type screen of the two-element configuration is configured such that the centrally located vertical lenticular screen 20 in the transmission type screens of a three-element configuration described hereinabove is eliminated. In particular, in the present transmission type screen, two screens of a horizontal lenticular screen 10 and a Fresnel screen 30 are disposed, and image light incoming from the right side in FIG. 9 is converted into parallel light in a direction perpendicular to the plane of the Fresnel screen 30 by the Fresnel screen 30. Then, the image light is deflected to a horizontal direction by the horizontal lenticular screen 10 to enlarge the angular field of view.

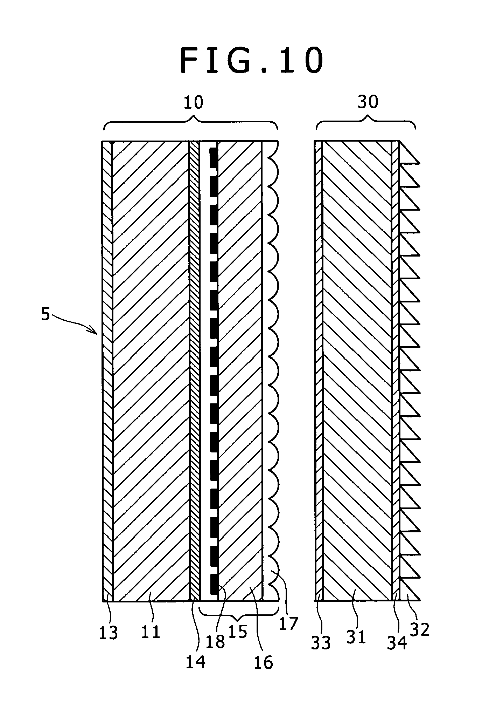

In the transmission type screen of FIG. 9, glass is used for the substrate 11 of the horizontal lenticular screen 10, and the Fresnel screen 30 is formed as a screen of the refraction type. FIG. 10 shows a modification to the transmission type screen of FIG. 9. In particular, while the Fresnel screen 30 in the transmission type screen of FIG. 9 is formed as a screen of the refraction type, the Fresnel screen 30 in the transmission type screen of FIG. 10 is formed as a screen of the reflection type.

It is to be noted that, in the transmission type screens shown in FIGS. 9 and 10, a fly-eye screen formed by laminating fly-eye lenses having both functions of horizontal lenticular lenses and vertical lenticular lenses to a substrate may be disposed in place of the horizontal lenticular screen 10.

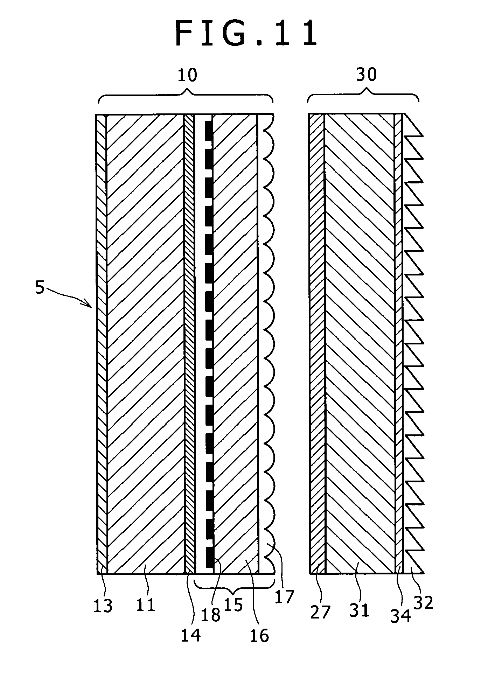

FIG. 11 shows a horizontal cross section of a further example of a transmission type screen of a two-element configuration.

Referring to FIG. 11, the transmission type screen shown is configured such that vertical lenticular lenses 27 corresponding to the horizontal lenticular lenses 17 of the horizontal lenticular screen 10 are formed on a Fresnel screen 30. In particular, in the present configuration, the vertical lenticular lenses 27 made of an ultraviolet curing type resin material or a thermosetting type resin material are formed by a shape transfer method on the observer side face of the glass substrate 31 of the Fresnel screen 30.

The main material of the vertical lenticular lenses 27 is an organic material such as styrene, acrylic, polycarbonate, epoxy, acrylate type monomer, acrylate-phosphorus type monomer, oligomer or copolymer of such compounds or an inorganic material such as ceramic or silica similarly as in the case of the Fresnel lens.

Further, a bead filler formed from an organic material such as styrene, acrylic, polycarbonate, epoxy, acrylate type monomer, acrylate-phosphorus type monomer, oligomer or copolymer of such compounds or an inorganic material such as ceramic or silica may be mixed into the layer from which the vertical lenticular lenses 27 are formed so that the layer of the vertical lenticular lenses 27 may have an internal diffusion characteristic.

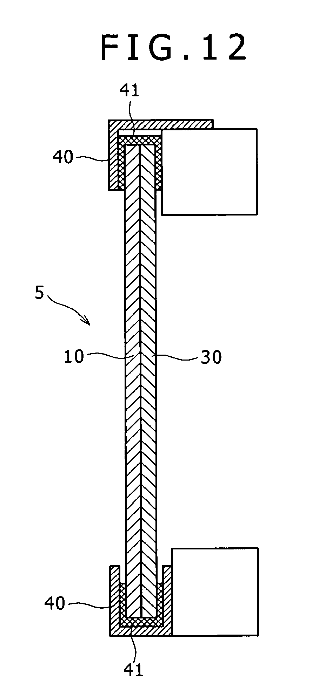

FIG. 12 shows a vertical cross section of an assembly structure of the transmission type screen of a two-element structure used in the examples described hereinabove with reference to FIGS. 9, 10 and 11 to the apparatus body. Referring to FIG. 12, where both of the substrate of the horizontal lenticular screen 10 and substrate of the Fresnel screen 30 are made of a glass material as in the transmission type screens described hereinabove with reference to FIGS. 9, 10 and 11, they are less likely to be influenced by environmental variations of the temperature and the humidity. Therefore, the horizontal lenticular screen 10 and the Fresnel screen 30 are formed such that the outer profiles thereof have a substantially equal size and are same as each other, and are held in a fixed state on the frame 40 on the apparatus body side.

Further, according to the structure shown in FIG. 12, if the horizontal lenticular screen 10 and the Fresnel screen 30 are held on the frame through cushion members 41 of, for example, a foamed urethane, polyethylene, rubber, acrylic or polyolefin sheet, then breakage of the glass by interference between the glass substrate and the frame can be prevented.

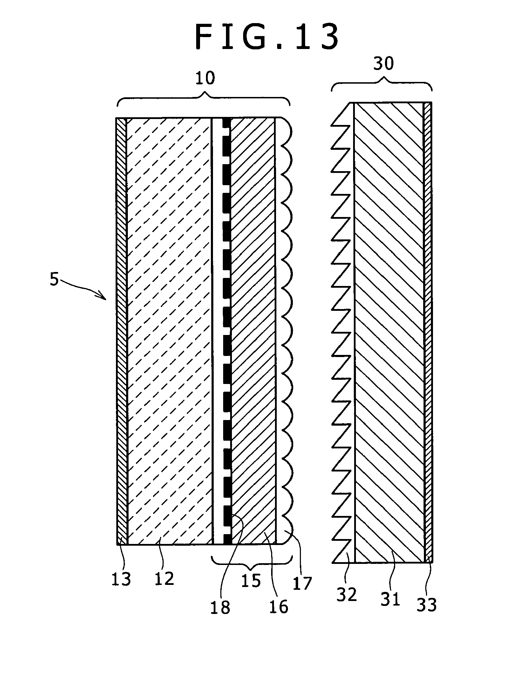

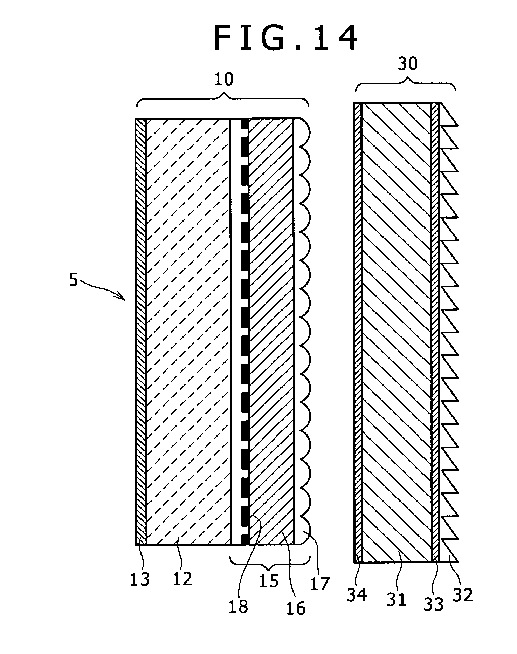

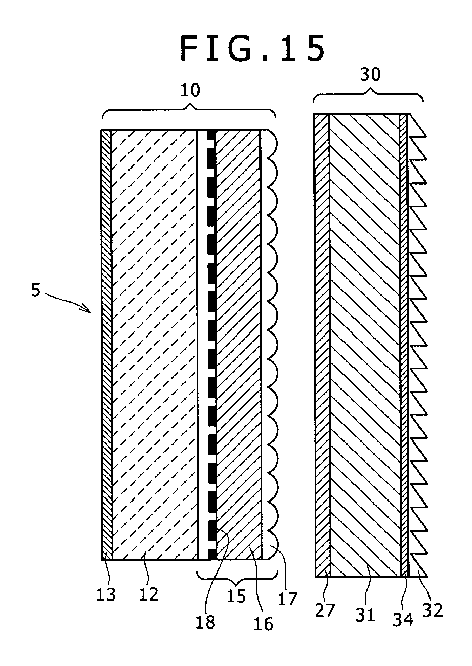

FIGS. 13, 14 and 15 show horizontal cross sections of further different examples of a transmission type screen of a two-element configuration. The transmission type screens of FIGS. 13, 14 and 15 are modifications to but are different from those of FIGS. 9, 10 and 11 described hereinabove, respectively, in that the substrate of the horizontal lenticular screen 10 is formed as a resin substrate 12.

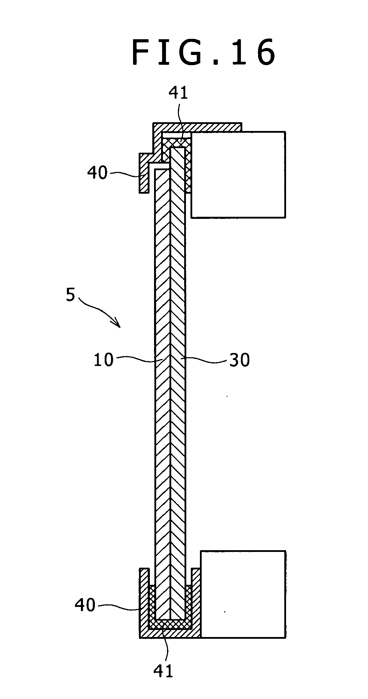

FIG. 16 shows a vertical cross section showing an assembly structure of the transmission type screens of the two-element structure used in the examples described hereinabove with reference to FIGS. 13, 14 and 15 to the apparatus body. Referring to FIG. 16, where the substrate of the horizontal lenticular screen 10 is made of a resin material and the substrate of the Fresnel screen 30 is made of a glass material as in the transmission type screens described hereinabove with reference to FIGS. 13, 14 and 15, the Fresnel screen 30 is formed with an outer profile greater than that of the horizontal lenticular screen 10 and is held in a fixed state on the frame 40 of the apparatus body side. Meanwhile, the horizontal lenticular screen 10 is held on the frame 40 in such a state that the sides thereof except one side (lower side) have a clearance separately from the Fresnel screen 30.

Where such a structure as described above is adopted, even if elongation or contraction of the resin material by environmental variations occurs with the horizontal lenticular screen 10, this is not obstructed unnaturally. Consequently, neither wrinkle nor warpage occurs with the horizontal lenticular screen 10.

Further, according to the structure shown in FIG. 16, if the Fresnel screen 30 is held on the frame 40 through cushion members 41 of, for example, a foamed urethane, polyethylene, rubber, acrylic or polyolefin sheet, then breakage of the glass by interference between the glass substrate and the frame can be prevented.

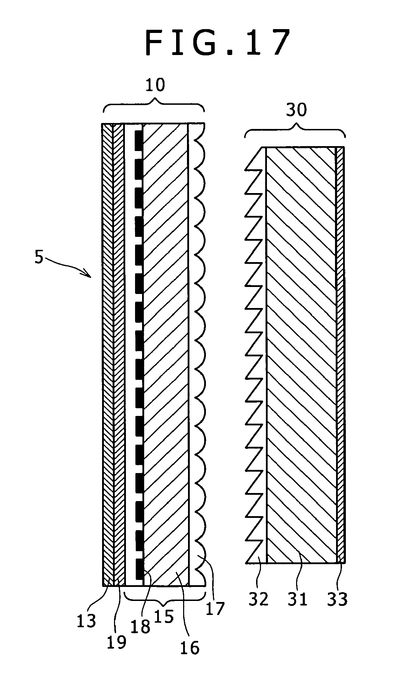

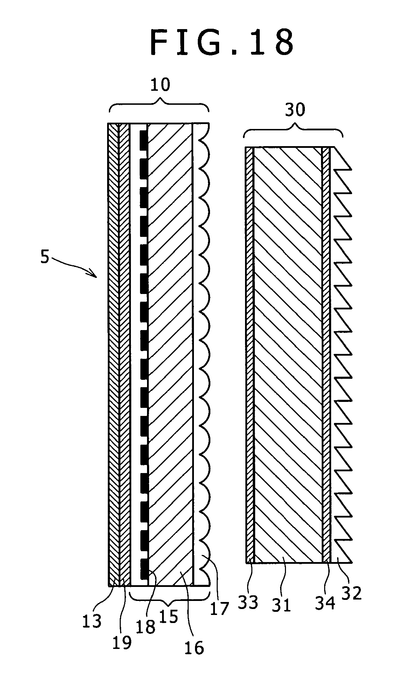

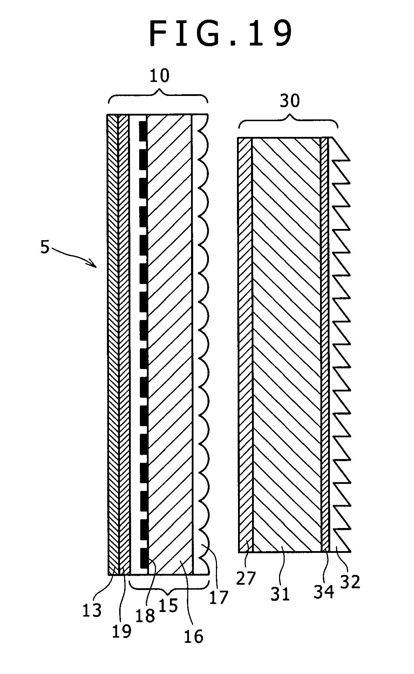

FIGS. 17, 18 and 19 show horizontal cross sections of further modifications to the transmission type screens of FIGS. 13, 14 and 15, respectively. In particular, the transmission type screens shown in FIGS. 17, 18 and 19 are modified such that the horizontal lenticular screen 10 is formed as a sheet-like screen. In this instance, a flat element having a thickness from 0.05 mm to 1.5 mm is defined as a sheet, and the horizontal lenticular screen 10 is formed with a thickness within the thickness range. In the transmission type screens in FIGS. 17, 18 and 19, a film 19 having a diffusion function is laminated to the horizontal lenticular lens sheet 15, and the antiglare hard coat layer 13 is formed on the film 19.

Where the horizontal lenticular screen 10 is in the form of a sheet and the Fresnel screen 30 has a glass substrate as in the transmission type screens of FIGS. 17, 18 and 19, the Fresnel screen 30 is held at the sides thereof except one side separately from the horizontal lenticular screen 10. Further, the horizontal lenticular screen 10 is formed with an outer profile greater than that of the Fresnel screen 30 and is held on the frame of the apparatus body side in a state wherein tension is applied thereto.

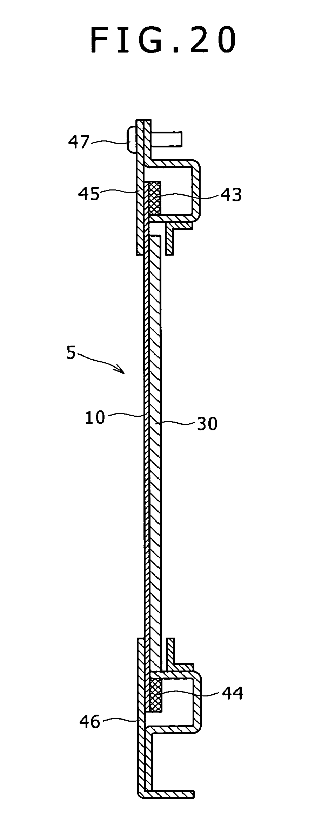

An example of the structure just described is shown in FIG. 20. FIG. 20 is a vertical cross sectional view of the structure. Referring to FIG. 20, the horizontal lenticular screen 10 in the form of a sheet has ribs (increased thickness portions) 43 and 44 of an increased thickness at an upper side portion and a lower side portion thereof, and an upper bracket 45 and a lower bracket 46 are attached in such a manner as to embrace the ribs 43 and 44, respectively.

In the transmission type screen 5, the upper bracket 45 is secured to the frame of the apparatus body side using fastening screws 47 or the like such that the horizontal lenticular screen 10 in the form of a sheet is disposed in a state wherein it is drawn downwardly by the gravity. In particular, the weight of the lower bracket 46 is applied as a load to the horizontal lenticular screen 10 so that the horizontal lenticular screen 10 is acted upon by downward tension.

Further, in the transmission type screen 5 shown in FIG. 20, the Fresnel screen 30 is held between the upper bracket 45 and the lower bracket 46 separately from the horizontal lenticular screen 10, and the weight of the Fresnel screen 30 is applied as tension to the horizontal lenticular screen 10 together with the lower bracket 46. Consequently, the horizontal lenticular screen 10 keeps its flatness stably without suffering from deformation or warpage.

It is to be noted that, in order to apply tension to a horizontal lenticular screen, for example, a configuration that the four sides of the horizontal lenticular screen are pulled by wires or the like, another configuration that pressing members are pressed against the horizontal lenticular screen to apply tension to the horizontal lenticular screen and some other configuration may be available in addition to the configuration described above.

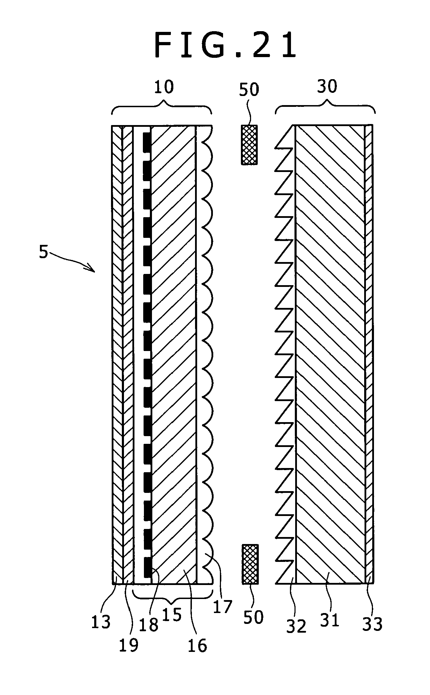

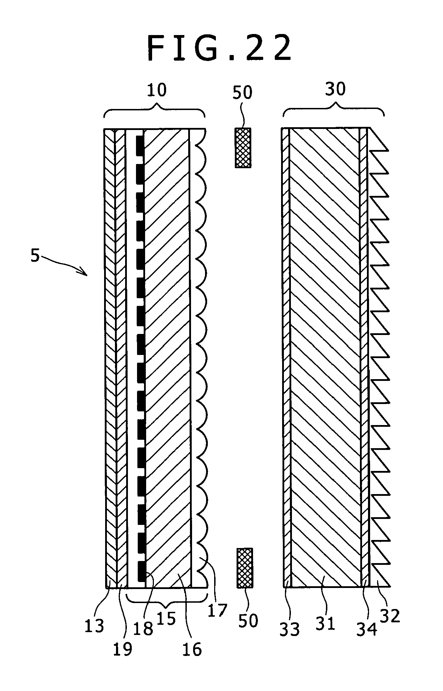

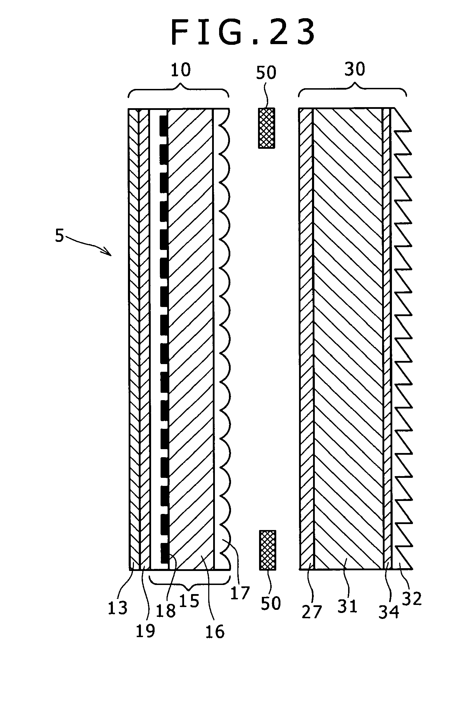

FIGS. 21, 22 and 23 show horizontal cross sections of further different modifications to the transmission type screens shown in FIGS. 17, 18 and 19, respectively. Referring to FIGS. 21, 22 and 23, the transmission type screens shown are configured such that a horizontal lenticular screen 10 in the form of a sheet and a Fresnel screen 30 are adhered into a unit member by means of an adhesion element 50. In this instance, the horizontal lenticular screen 10 in the form of a sheet is adhered along all four sides thereof to and combined with the Fresnel screen 30 by means of the adhesion element 50. The adhesion element 50 here may be made of, for example, an ultraviolet curing type resin material. In particular, the ultraviolet curing type resin material is applied to an entire peripheral portion of one of the horizontal lenticular screen 10 and the Fresnel screen 30, and then the horizontal lenticular screen 10 and the Fresnel screen 30 are combined. In this state, ultraviolet rays are irradiated to harden the ultraviolet curing type resin material so that the horizontal lenticular screen 10 and the Fresnel screen 30 are adhered to each other.

In a transmission type screen wherein the horizontal lenticular screen 10 in the form of a sheet is adhered and combined, at all of the four sides thereof, to and with the Fresnel screen 30 by means of an adhesive element in this manner, the sealability of the inside thereof is maintained with certainty. Therefore, variation in dimension caused by environmental variations of the temperature and the humidity is suppressed. As a result, the flatness of the screen is maintained with certainty and a stabilized image can be obtained.

While preferred embodiments of the present invention have been described using specific terms, such description is for illustrative purposes only, and it is to be understood that changes and variations may be made without departing from the spirit or scope of the following claims.

## Claims

1. A rear projection display apparatus, comprising:
an apparatus body;
a transmission type screen disposed on the front face of said apparatus body; and
an image projection apparatus disposed in the inside of said apparatus body and configured to project an image to said transmission type screen from the rear side of said transmission type screen;
said transmission type screen having a three-element configuration including a horizontal lenticular screen, a vertical lenticular screen and a Fresnel screen or a two-element configuration including a horizontal lenticular screen or a fly-eye screen and a Fresnel screen;
said Fresnel screen including a substrate made of a glass material and one or a plurality of ones of a lens, an antiglare layer and an internal diffusion layer formed directly on said substrate but provided not by lamination.

2. The rear projection display apparatus according to claim 1, wherein the lens, antiglare layer and internal diffusion layer of said Fresnel screen are formed on the glass substrate using an ultraviolet curing type resin material or a thermosetting type resin material.

3. The rear projection display apparatus according to claim 1, wherein said transmission type screen has the three-element configuration which includes a horizontal lenticular screen having a glass substrate, a vertical lenticular screen having a resin substrate and a Fresnel screen having a glass substrate, and
said horizontal lenticular screen and said Fresnel screen have a substantially same outer profile and are held fixedly on said apparatus body while said vertical lenticular screen is formed with an outer profile smaller than that of said horizontal lenticular screen and said Fresnel screen and is held in a sandwiched manner between said horizontal lenticular screen and said Fresnel screen.

4. The rear projection display apparatus according to claim 1, wherein said transmission type screen has the three-element configuration which includes a horizontal lenticular screen having a resin substrate, a vertical lenticular screen having a resin substrate and a Fresnel screen having a glass substrate or the two-element configuration which includes a horizontal lenticular screen or fly-eye screen having a resin substrate and a Fresnel screen having a glass substrate, and
said Fresnel screen is formed with an outer profile greater than that of the other screen or screens and is fixedly held on said apparatus body while sides except one side of the other screen or screens are held with a clearance on said apparatus body separately from said Fresnel screen.

5. The rear projection display apparatus according to claim 1, wherein said transmission type screen has the two-element configuration which includes a horizontal lenticular screen having a glass substrate and a Fresnel screen having a glass substrate, and
said horizontal lenticular screen and said Fresnel screen are formed with a substantially same outer profile and fixedly held on said apparatus body.

6. The rear projection display apparatus according to claim 1, wherein said transmission type screen has the two-element configuration which includes a horizontal lenticular screen or fly-eye screen in the form of a sheet and a Fresnel screen having a glass substrate, and
said Fresnel screen is held at sides except one side thereof separately from said horizontal lenticular screen or fly-eye screen while said horizontal lenticular screen or fly-eye screen is formed with an outer profile greater than that of said Fresnel screen and is held on said apparatus body in such a state that tension is applied thereto.

7. The rear projection display apparatus according to claim 1, wherein said transmission type screen has the two-element configuration which includes a horizontal lenticular screen or fly-eye screen in the form of a sheet and a Fresnel screen having a glass substrate, and
said horizontal lenticular screen or fly-eye screen is adhered and combined at four sides thereof to and with said Fresnel screen by means of an adhesion element.

8. A transmission type screen for being installed on the front face of a rear projection display apparatus, having
a three-element configuration including a horizontal lenticular screen, a vertical lenticular screen and a Fresnel screen or a two-element configuration including a horizontal lenticular screen or a fly-eye screen and a Fresnel screen;
said Fresnel screen including a substrate made of a glass material and one or a plurality of ones of a lens, an antiglare layer and an internal diffusion layer formed directly on said substrate but provided not by lamination.

9. The transmission type screen according to claim 8, wherein the lens, antiglare layer and internal diffusion layer of said Fresnel screen are formed on the glass substrate using an ultraviolet curing type resin material or a thermosetting type resin material.

10. The transmission type screen according to claim 8, wherein said transmission type screen has the three-element configuration which includes a horizontal lenticular screen having a glass substrate, a vertical lenticular screen having a resin substrate and a Fresnel screen having a glass substrate, and said horizontal lenticular screen and said Fresnel screen have a substantially same outer profile and are held fixedly on said apparatus body while said vertical lenticular screen is formed with an outer profile smaller than that of said horizontal lenticular screen and said Fresnel screen and is held in a sandwiched manner between said horizontal lenticular screen and said Fresnel screen.

11. The transmission type screen according to claim 8, wherein said transmission type screen has the three-element configuration which includes a horizontal lenticular screen having a resin substrate, a vertical lenticular screen having a resin substrate and a Fresnel screen having a glass substrate or the two-element configuration which includes a horizontal lenticular screen or fly-eye screen having a resin substrate and a Fresnel screen having a glass substrate, and
said Fresnel screen is formed with an outer profile greater than that of the other screen or screens and is fixedly held on said apparatus body while sides except one side of the other screen or screens are held with a clearance on said apparatus body separately from said Fresnel screen.

12. The transmission type screen according to claim 8, wherein said transmission type screen has the two-element configuration which includes a horizontal lenticular screen having a glass substrate and a Fresnel screen having a glass substrate, and
said horizontal lenticular screen and said Fresnel screen are formed with a substantially same outer profile and fixedly held on said apparatus body.

13. The transmission type screen according to claim 8, wherein said transmission type screen has the two-element configuration which includes a horizontal lenticular screen or fly-eye screen in the form of a sheet and a Fresnel screen having a glass substrate, and
said Fresnel screen is held at sides except one side thereof separately from said horizontal lenticular screen or fly-eye screen while said horizontal lenticular screen or fly-eye screen is formed with an outer profile greater than that of said Fresnel screen and is held on said apparatus body in such a state that tension is applied thereto.

14. The transmission type screen according to claim 8, wherein said transmission type screen has the two-element configuration which includes a horizontal lenticular screen or fly-eye screen in the form of a sheet and a Fresnel screen having a glass substrate, and
said horizontal lenticular screen or fly-eye screen is adhered and combined at four sides thereof to and with said Fresnel screen by means of an adhesion element.
